# EUROPEAN PATENT SPECIFICATION

(11) **EP 3 824 744 B1**
(45) Date of publication and mention of the grant of the patent: **27.12.2023**
(21) Application number: 20208693.0
(22) Date of filing: 19.11.2020
(51) Int. Cl.: A23N 15/01, A01D 45/26

(54) **DEVICE FOR REMOVING SPROUTS FROM A PLANT STEM**
VORRICHTUNG ZUM ENTFERNEN VON SPROSSEN AUS EINEM PFLANZENSTAMM
DISPOSITIF POUR ENLEVER LES GERMES DE LA TIGE D'UNE PLANTE

(30) Priority: 21.11.2019 NL 2024275
(43) Date of publication of application: 26.05.2021
(73) Proprietor: Tumoba Vegetable Harvesters B.V., 2991 VC Barendrecht (NL)
(72) Inventor: Molenaar, Hendrik Willem, 2991VC Barendrecht (NL)
(74) Representative: Geurts, Franciscus Antonius

(56) References cited:
- EP-A1- 0 501 544
- GB-A- 1 103 791
- US-A- 3 252 463
- US-A- 3 410 272

## Description

### BACKGROUND OF THE INVENTION

The invention relates to a device for mechanically removing sprouts from a stalk or stem of a Brussels sprout plant.

It is known to mechanically remove sprouts from the stem, after dislodging a stem including sprouts from the soil, by cutting or scraping the sprouts from the stem. For that purpose, a so-called picking head as for instance described in NL patent application 91.00325 is often used.

Dislodging the soil often takes place mechanically, wherein a harvesting machine is moved across the field and the stems are each time cut through near ground level using driven blades. The dislodged stem including the sprouts on it - also called stalk - can then be manually fed into and passed through a picking head. The bare stem then exits the picking head at the other side, the sprouts being collected in a storage bin.

EP patent 0.962.153 describes a harvesting machine provided with a transfer device for mechanically transferring the stalk to a feeding-/passage device with which the stem is fed into and passed through the picking head.

A device as described in the preamble of claim 1 is known from US 3.252.463.

Brussels sprout plants have stems, the shapes of which vary: one stem may be straight, another may have a curvature, and another stem may have a double curvature in one plane, and yet another stem may have a double curvature in two planes, etcetera. Consequently, when feeding the stem into the picking head, the position of the sprouts in the passageway of the picking head varies, relative to the passageway centre line. As a result, it may happen that sprouts remain attached to the stem and/or that parts of the stem end up in the storage bin for sprouts and/or that the stem breaks and gets stuck in the picking head. This may be the case when manually feeding the stem, but especially when mechanically feeding the stalk, like in the aforementioned European patent.

### SUMMARY OF THE INVENTION

It is an object of the invention to be able to improve on this.

It is an object of the invention to provide a device for mechanically removing sprouts from a stalk or stem of a Brussels sprout plant, with which at least almost all sprouts can be harvested from a stem.

It is an object of the invention to provide a device for mechanically, through mechanical feeding, removing sprouts from a stalk or stem of a Brussels sprout plant, with which at least almost all sprouts can be harvested from a stem.

It is an object of the invention to provide a device for mechanically, through manual feeding, removing sprouts from a stalk or stem of a Brussels sprout plant, with which at least almost all sprouts can be harvested from a stem.

It is an object of the invention to provide a device of the type mentioned in the preamble with which the harvested sprouts are undamaged to a large extent.

It is an object of the invention to provide a device of the type mentioned in the preamble in which few malfunctions occur.

According to one aspect, the invention provides a device for the removal of sprouts from a plant stem, comprising
- a main frame;
- a drive for moving the main frame across a harvest field;
- a holder supported in the main frame;
- driven severing means disposed on the holder, for severing the sprout-stem connection;
- wherein the severing means define an annular passageway for the stem, which passageway has a passageway centre line, which, in a neutral position of the holder, has a starting direction;
- passage means provided with a drive for passing the stem through the passageway;
- wherein the holder is disposed in the main frame for movement initiated due to the severing means contacting the stem during the stem being passed through the severing means, with translation of the passageway centre line in a direction having a directional component transverse thereto and/or with the passageway centre line tilting.

Thus, the holder with the severing means, such as a picking head, is at least slightly compliant relative to the main frame so that a changing course of the stem can be followed by the severing means. Consequently, the transverse forces exerted on the stem can remain within limits, reducing the risk of the stem breaking. The engagement of the sprouts by the severing means can then be more evenly in circumferential sense.

In one embodiment, the holder is disposed in the main frame for movement initiated due to contacting the stem during the stem being passed through the severing means, with translation of the passageway centre line in vertical and/or horizontal direction. The holder can then be only movable in a plane transverse to the passage centre line. The severing means then follow the location of the cross-section of the stem in a plane transverse to passageway centre line.

In another or additional embodiment, the holder is disposed in the main frame for a tilting motion during the stem being passed through the severing means in a manner enabling rotation about a first centre line, which first centre line is transverse to the passageway centre line, in the neutral position. This provides the holder including severing means (such as a picking head) with the possibility to conform to the local shape of a stem passing through the severing means, which local shape does not extend straight. This further increases the effectiveness of the process of removing the sprouts.

This effect is further increased if, according to a further embodiment, the holder is also disposed in the main frame for a tilting motion during the stem being passed through the severing means in a manner enabling rotation about a second centre line, which second centre line is transverse to the passageway centre line and transverse to the first centre line. Due to a combination of both possible rotary motions, the holder with severing means is capable of following a curvature of the stem in any direction. In a specific embodiment thereof, the holder is arranged on/attached to the main frame by means of a ball joint, for tilting motions about any of all centre lines that are in a plane perpendicular to the passageway centre line of the holder. The holder can then be tilted about an infinite number of centre lines.

It is noted that the neutral position is a position in which the passageway and consequently the severing means is/are situated, immediately prior to feeding a stem.

In one embodiment, the first centre line is horizontally or vertically oriented. The second centre line can then be vertically or horizontally oriented, respectively.

Between the holder and the main frame, means can be disposed for biassing the holder into the neutral position. This can for instance be done using springs that are active between the holder and the main frame. In one embodiment, the passageway centre line is horizontally oriented when in the neutral position of the holder. This is in accordance per se with the arrangement in European patent 0.962.153.

In a further development, the drive means for the severing means are attached to the holder for joint movement with it. As a result, the transmission of the drive forces can be simple in terms of construction.

The device according to the invention can comprise an intermediate holder disposed between the holder and the main frame, wherein the intermediate holder is movably attached to the main frame, in a manner enabling rotation about the first centre line. The intermediate holder can be utilised for separating the means for realising both movement freedoms of the holder from each other, thus keeping the construction simple and malfunction-proof to a large extent. For that purpose, the holder can be movably attached to the intermediate holder, in a manner enabling rotation about the second centre line.

The passage means can comprise feeding means disposed at the upstream side of the severing means, which feeding means are configured for according to a feeding centre line feeding the stem into the passageway, which feeding centre line is parallel to the starting direction of the passageway centre line. In an embodiment that is simple in terms of design, the feeding centre line is fixedly oriented in the main frame.

In accordance with the state of the art discussed above, the passage means can comprise draw-through devices disposed at the downstream side of the passageway, for drawing the stem through the severing means and passageway. In that way it is achieved that also once the feeding means have arrived at the end of the feeding stroke, the stem continues to be passed through and can be passed on to further treatment stations. The draw-through devices can be disposed directly on the main frame, independent of the holder.

According to a further aspect, the invention provides a harvesting device, as an assembly of a device according to the invention and devices for dislodging a Brussels sprout plant from the soil and picking up and transferring the dislodged Brussels sprout plant. The feeding means can then be placed in a take-over position to take over the picked-up sprout plant from the transfer device. The device according to European patent 0.962.153 can for instance be supplemented with a picking head holder according to the invention.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figures 1A-C show an inclined front view, a rear view, and an inclined rear view, respectively, of a device according to the invention;
Figure 2 shows a side view of the device of figures 1A-C during operation;
Figure 3 shows a depiction of a severed stalk of a Brussels sprout plant to be treated with the device according to the invention;
Figures 4A and 4B show a schematic representation from the front and rear of a part of a first alternative embodiment of a device according to the invention; and
Figures 5A-C show a schematic representation from the front, rear and in cross-section of a part of a second alternative embodiment of a device according to the invention.

### DETAILED DESCRIPTION OF THE DRAWINGS

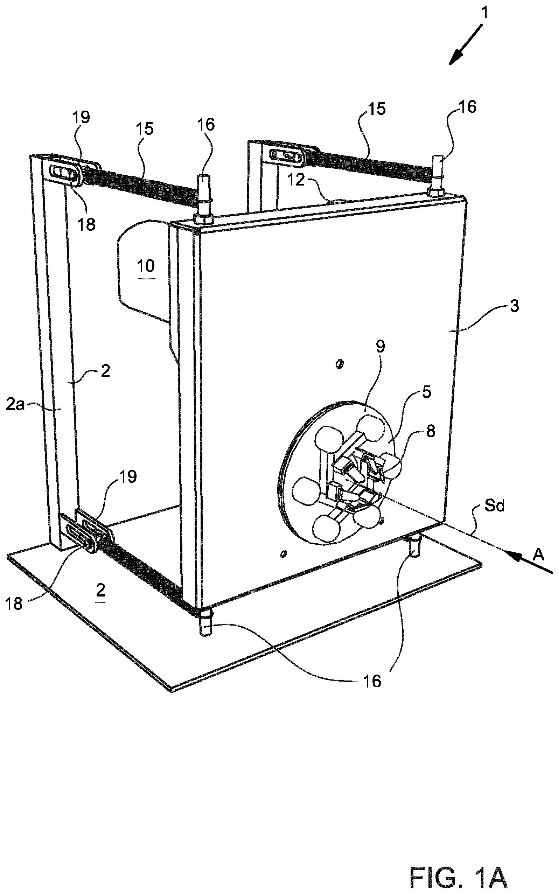

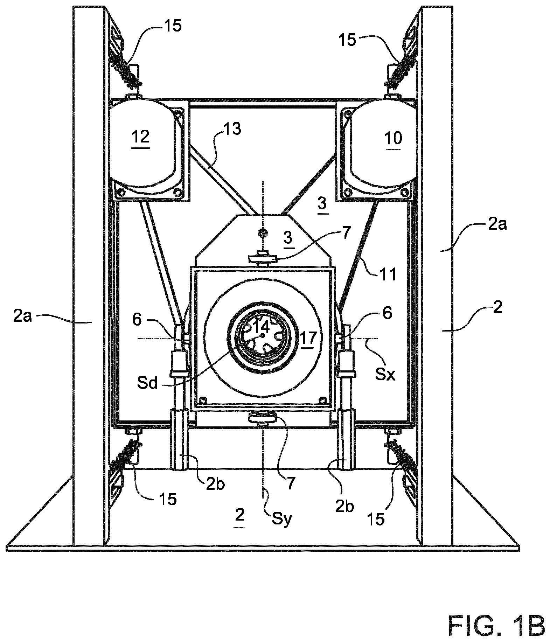

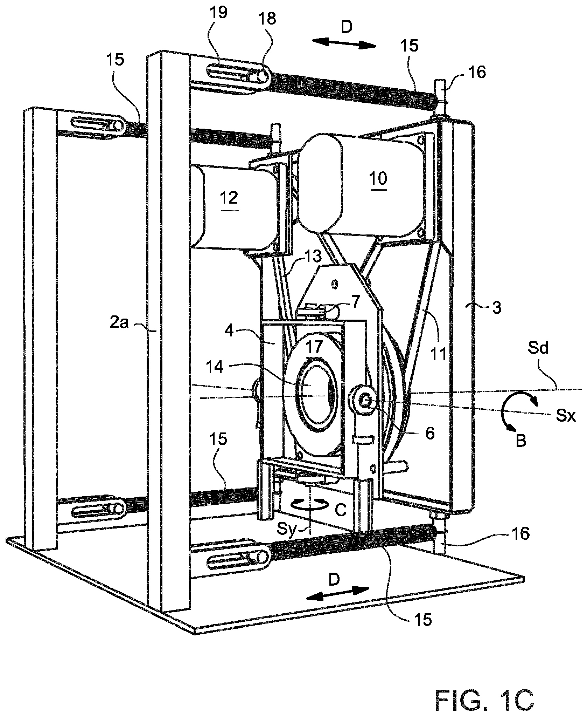

The device 1 shown in figures 1A-C, for removing sprouts from a stem comprises a main frame 2 that is fixedly attached to a chassis (not shown) of a driven harvesting machine capable of moving across a field during harvesting.

The main frame 2 comprises two columns 2a and two supports 2b for a holder 3. Severing means including a picking head 5 with blades 8 and a rotor 9 are attached to the holder 3, with a bearing ring 17 for the rotor 9 at its downstream side. Furthermore attached to the holder 3 are a motor 10 and a drive belt 11 for the blades 8 and a motor 12 and drive belt 13 for the rotor 9. The blades 8 rotate along with the rotor 9.

The picking head 5, in particular the rotor 9, and the bearing ring 17 form a passageway 14 for a stem of a Brussels sprout plant, having a passageway centre line Sd.

The holder 3 is hinged to an auxiliary frame 4. The auxiliary frame 4 itself is attached such to supports 2b by two aligned hinge joints 6 that the auxiliary frame 4 is capable of rotating relative to the main frame 2 about horizontal centre line Sx, directions B. The holder 3 is attached such to the auxiliary frame 4 by two aligned hinge joints 7 that the holder 3 is capable of rotating relative to the auxiliary frame 4 about vertical centre line Sy, directions C. In that way it is achieved that the holder 3 is capable of rotating relative to the main frame 2 about two centre lines Sx and Sy, directions B and directions C.

At its top side and bottom side, the holder 3 is provided with projecting pins 16, to which the outer ends of springs 15 are attached. The other outer ends of the springs 15 are attached to adjustment pins 18, which are accommodated in slotted holes 19 at the upper ends and lower ends of columns 2a so as to slide. The springs 15 are springs that are pre-biassed in the condition in which the turns lie against each other, so that the pins 18 are pulled against the ends of the slotted holes 19. Because the centre of gravity of the holder 3 is situated at the upstream side of the hinge centre line Sx, the holder will of its own accord tend to tilt in the vertical plane, but the springs 15 are chosen such geared to the mass moment of the holder 3, that prior to feeding a stem, the springs 15 take up the neutral position shown. In that way, the orientation of the holder 3 is also defined immediately prior to a treatment process. The springs 15 enable movements of the pins 16 in the directions D and ensure that the holder 3 returns to the neutral position. When, during the mechanical or manual feeding of the stem into the picking head 5, a force is exerted on the holder 3 as a result of which the pre-biassing force of the top or bottom springs 15 is exceeded, the holder is able to tilt about centre line Sx.

Furthermore, it is possible that during the feeding process of the stem into the picking head 5, the one pair of springs 15 situated one above the other is stretched and the other pair of springs situated one above the other is compressed, wherein the pin 18 in question is moved in the slotted hole 19, as a result of which a tilting about centre line Sy of the holder can be followed and also while in motion the holder is being pre-biassed into the neutral position. Other combinations of movements of springs 15 are possible.

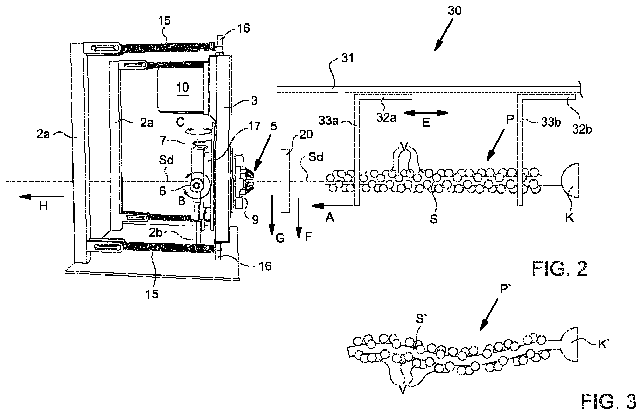

On the basis of figure 2, the use of the device 1 will be gone into for a stalk of vegetable plant P that was previously dislodged from the field, which stalk has a stem S with sprouts V and a leaf crown K.

In the condition immediately prior to use, the passageway centre line Sd of the passageway 14 is oriented according to a starting direction that is parallel to the feeding direction or feeding centre line A of a vegetable plant P to be treated. The direction Sd is then perpendicular to Sx and Sy.

A feeding device 30 is attached to the chassis of the harvesting machine and/or to the main frame 2, the feeding device comprising a rail 31 and carriages 32a,b that can be moved back and forth along said rail, directions E. The carriages 32a,b each bear a pair of grippers 33a,b, with which the stalk P is held, after the stalk has been taken over from a transfer device that is not shown (for instance in accordance with the arrangement shown in European patent 0.962.153).

The carriages 32a,b take the stalk P, the cut end in the lead, to a pair of leaf rollers 20, in between which the gripper pair 33a is able to pass through in between. The grippers 33a feed the leading end of the stalk P into the passageway 14 between the blades 8. The blades 8 are rotated by the motor 12 with the rotor 9 and have been put into a cutting position by the motor 10. Once the carriage 32a has arrived in front of the picking head 5, the movement of that carriage is stopped and the grippers 33a are opened. The onward feeding of the stem is then taken care of by the carriage 32b with grippers 33b. With the onward movement of the carriage 32b, the stem is fed onward into the passageway 14, wherein the cut-off sprouts V fall down, direction G, into a collection tray.

Once the carriage 32b has arrived at the leaf rollers 20, the grippers 33b are also opened in order to enable the crown to come between the leaf rollers. The leaf rollers are rotated in a direction opposing the feeding direction A, so that the leaves removed from the stem by the blades 8 are discharged and fall down on the field in the direction F.

The stem S is drawn through further by draw-through means that are not shown, in order to end up entirely behind the holder 3 and auxiliary frame 4 and to be passed on to a shredder, to be shredded into chips which are then deposited on the field.

When the stem S of the vegetable plant P is not as straight as shown in figure 2, but has one or more curvatures or buckles, such as stalk P in figure 3, the picking head 5 with rotor 9 and bearing ring 17 are able to conform to the shape of the stem due to the manner in which the holder 3 is mounted. This is possible due to the hinge joints 6 and 7. The springs 15 each time ensure return to a starting position of the holder in which the centre line Sd is parallel to the feeding direction A.

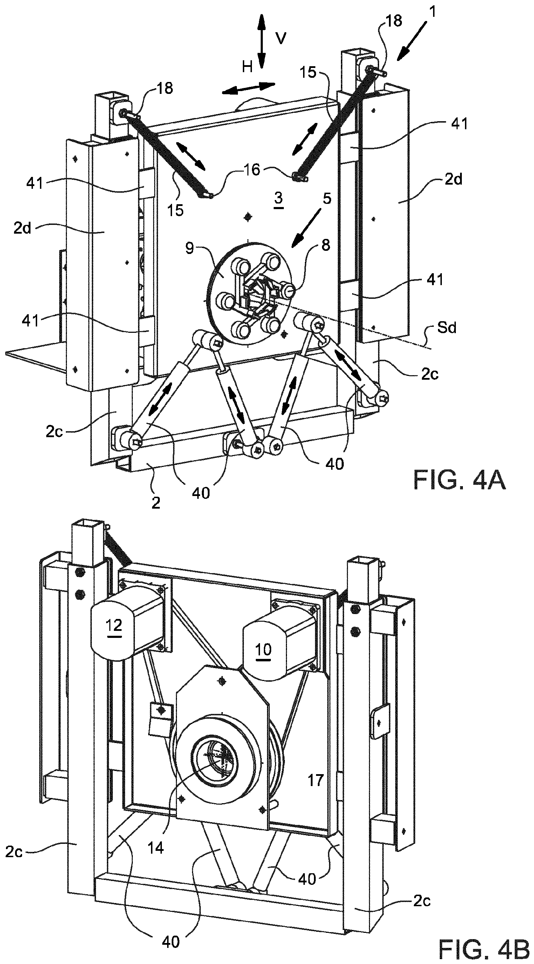

Figures 4A and 4B show an embodiment in which the holder 3 is suspended from the main frame 2 by means of two of draw springs 15 extending between pins 16 on the holder and pins 18 on the main frame 2 and is resiliently supported on the main frame by means of two pairs of gas springs 40. In that way, the holder 3 and the picking head 5 attached thereto can resiliently move back and forth in the vertical directions V and horizontal directions H, perpendicular to the passageway centre line Sd. The holder 3 is kept in a plane perpendicular to the passageway centre line Sd, by lips 41 attached to the lateral sides of the holder 3, which lips are guided between columns 2c and plates 2d that are part of the main frame 2 and which provide the lips 41 the desired freedom of movement in vertical and horizontal directions.

A combination of the embodiment of figures 4A,B with the one of figures 1A-C is possible. The supports 2b in figures 1A-C may then be replaced by gas springs enabling a motion of the holder 3 in vertical and horizontal direction, in combination with the already available possible tilting motions.

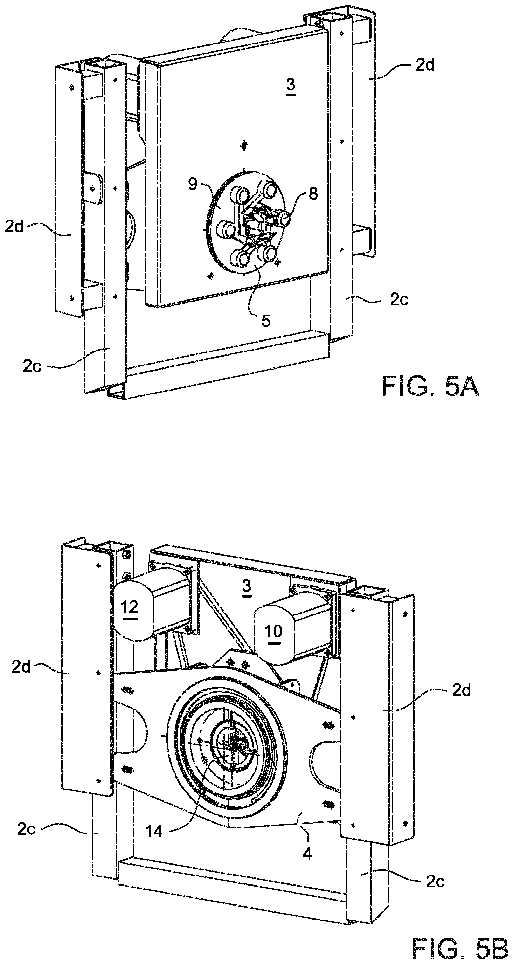

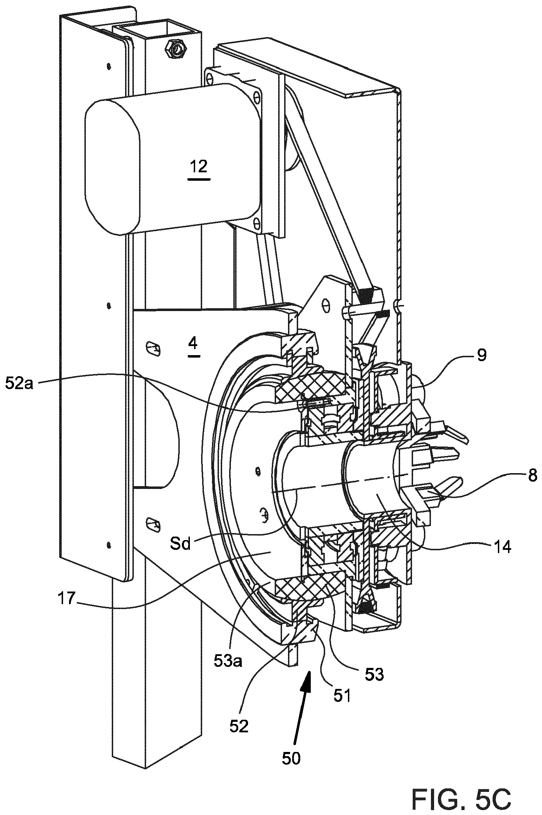

Figures 5A-C show an embodiment in which the holder 3 is attached to the plate 4 by means of a ball joint arrangement 50, the plate being fixedly attached to columns 2c,d of the main frame 2. The ball joint arrangement 50 comprises a ring 51 that is fixed with the plate 4, the ring 51 at its inner circumference being provided with a ring 52 which has an inner edge 52a with a surface that is concave in cross-section according to a circle curve. Against the inner edge 52a lies an outer edge 53a having a surface that is convex in cross-section according to a matching circle curve, which outer edge 53a forms the outer circumference of the bearing ring 17. In that way, the bearing ring and thus the holder 3 including picking head 5 is capable of rotating about any centre line in a plane T perpendicular to the passageway centre line Sd. In this embodiment, the holder 3 can be preloaded into the neutral position by springs 15 in a manner comparable to the embodiment of figures 1A-C.

A combination of the embodiment of figures 5A-C with the one of figure 4A,B is possible in order to thus be able to realise a combination of translatory motions and tilting motions. The plate 4 of figures 5A-C will then be guided between columns 2c and plates 2d in vertically and horizontally movable fashion by lips, such as lips 41 of figures 4a-c and in a comparable manner be connected to the frame 2 by gas springs (such as gas springs 40), and optionally draw springs (such as draw springs 15).

The invention is/inventions are not at all limited to the embodiments discussed in the description and shown in the drawings. The above description has been included to illustrate the operation of preferred embodiments of the invention and not to limit the scope of the invention.

## Claims

1. Device (1) for removing sprouts from a plant stem, comprising
- a main frame (2);
- a drive for moving the main frame across a harvest field;
- a holder (3) supported in the main frame;
- driven severing means (5,8,9) disposed on the holder for severing the sprout-stem connection;
- wherein the severing means (5,8,9) define an annular passageway (14) for the stem, which passageway has a passageway centre line (Sd), which, in a neutral position of the holder, has a starting direction;
- passage means (30) provided with a drive for passing the stem through the passageway;
**characterized in that**
the holder (3) is disposed in the main frame for movement initiated due to the severing means (5,8,9) contacting the stem during the stem being passed through the severing means, with translation of the passageway centre line (Sd) in a direction having a directional component transverse thereto and/or with the passageway centre line tilting.

2. Device according to claim 1,
- wherein the holder (3) is disposed in the main frame (2) for movement during the stem being passed through the severing means (5,8,9), with translation of the passageway centre line (Sd) in vertical and/or horizontal direction.

3. Device according to claim 2, wherein the holder (3) is movable only in a plane transverse to the passageway centre line (Sd).

4. Device according to claim 1, 2 or 3,
- wherein the holder (3) is disposed in the main frame (2) for a tilting motion during the stem being passed through the severing means (5,8,9) in a manner enabling rotation about a first centre line (Sx;Sy), which first centre line is transverse to the passageway centre line (Sd), in the neutral position.

5. Device according to claim 4,
- wherein the holder (3) is also disposed in the main frame (2) for a tilting motion during the stem being passed through the severing means (5,8,9) in a manner enabling rotation about a second centre line (Sy;Sx), which second centre line is transverse to the passageway centre line (Sd) and transverse to the first centre line (Sx;Sy).

6. Device according to claim 4 or 5,
- wherein the first centre line (Sx;Sy) is horizontally or vertically oriented.

7. Device according to claim 5 or 6,
- wherein the second centre line (Sy;Sx) is vertically or horizontally oriented.

8. Device according to claim 4, 5 or 6,
- wherein the holder (3) is disposed in the main frame (2) by means of a ball joint (50), for tilting motions about any of all centre lines that are in a plane perpendicular to the passageway centre line of the holder.

9. Device according to any one of the preceding claims,
- comprising an intermediate holder (4) disposed between the holder (3) and the main frame (2),
- wherein the intermediate holder is movably attached to the main frame, in a manner enabling rotation about the first centre line.

10. Device according to claim 9 and according to claim 5,
- wherein the holder (3) is movably attached to the intermediate holder (4), in a manner enabling rotation about the second centre line.

11. Device according to any one of the preceding claims,
- wherein means (15) have been disposed between the holder (3) and the main frame (2) for biassing the holder into the neutral position, wherein, preferably, in the neutral position of the holder, the passageway centre line (Sd) is horizontally oriented.

12. Device according to any one of the preceding claims,
- comprising drive means (10-13) for the severing means, wherein the drive means for the severing means are attached to the holder (3) for joint movement with it.

13. Device according to any one of the preceding claims,
- wherein the passage means (30) comprise feeding means disposed at the upstream side of the severing means, which feeding means are configured for according to a feeding centre line feeding the stem into the passageway (14), which feeding centre line is parallel to the starting direction of the passageway centre line (Sd), wherein, preferably, the feeding centre line is fixedly oriented in the main frame.

14. Device according to any one of the preceding claims,
- wherein the passage means comprise draw-through devices disposed at the downstream side of the passageway, for drawing the stem through the passageway.

15. Harvesting device as assembly of a device (1) according to any one of the preceding claims and devices for dislodging a sprout plant from the soil and picking up and transferring the dislodged sprout plant, wherein, preferably, the feeding means (30) can be placed in a take-over position to take over the picked-up sprout plant from the transfer device.

## Patentansprüche

1. Vorrichtung (1) zum Entfernen von Sprossen von einem Pflanzenstamm, die folgende Merkmale aufweist:
einen Hauptrahmen (2);
einen Antrieb zum Bewegen des Hauptrahmens über ein Erntefeld;
eine Halterung (3), die in dem Hauptrahmen getragen wird;
eine angetriebene Abtrenneinrichtung (5, 8, 9), die an der Halterung angeordnet ist, zum Abtrennen der Sprosse-Stamm-Verbindung;
wobei die Abtrenneinrichtung (5, 8, 9) einen ringförmigen Durchgang (14) für den Stamm definiert, wobei der Durchgang eine Durchgangsmittellinie (Sd) aufweist, die in einer neutralen Position der Halterung eine Startrichtung aufweist;
eine Durchgangseinrichtung (30), die mit einem Antrieb zum Durchlaufenlassen des Stamms durch den Durchgang versehen ist;
**dadurch gekennzeichnet, dass**
die Halterung (3) in dem Hauptrahmen für eine Bewegung angeordnet ist, die aufgrund dessen eingeleitet wird, dass die Abtrenneinrichtung (5, 8, 9) den Stamm berührt, während der Stamm durch die Abtrenneinrichtung läuft, wobei eine Verschiebung der Durchgangsmittellinie (Sd) in einer Richtung mit einer Richtungskomponente quer zu derselben erfolgt und/oder wobei die Durchgangsmittellinie geneigt ist.

2. Vorrichtung gemäß Anspruch 1,
bei der die Halterung (3) in dem Hauptrahmen (2) für eine Bewegung angeordnet ist, während der Stamm durch die Abtrenneinrichtung (5, 8, 9) läuft, wobei eine Verschiebung der Durchgangsmittellinie (Sd) in der Vertikal- und/oder Horizontalrichtung erfolgt.

3. Vorrichtung gemäß Anspruch 2, bei der die Halterung (3) nur in einer Ebene quer zu der Durchgangsmittellinie (Sd) beweglich ist.

4. Vorrichtung gemäß Anspruch 1, 2 oder 3,
bei der die Halterung (3) in dem Hauptrahmen (2) für eine Neigungsbewegung angeordnet ist, während der Stamm durch die Abtrenneinrichtung (5, 8, 9) läuft, in einer Weise, die eine Drehung um eine erste Mittellinie (Sx; Sy) ermöglicht, wobei die erste Mittellinie quer zu der Durchgangsmittellinie (Sd) ist, in der Neutralposition.

5. Vorrichtung gemäß Anspruch 4,
bei der die Halterung (3) auch in dem Hauptrahmen (2) für eine Neigungsbewegung angeordnet ist, während der Stamm durch die Abtrenneinrichtung (5, 8, 9) läuft, in einer Weise, die eine Drehung um eine zweite Mittellinie (Sy; Sx) ermöglicht, wobei die zweite Mittellinie quer zu der Durchgangsmittellinie (Sd) und quer zu der ersten Mittellinie (Sx; Sy) ist.

6. Vorrichtung gemäß Anspruch 4 oder 5,
bei der die erste Mittellinie (Sx; Sy) horizontal oder vertikal ausgerichtet ist.

7. Vorrichtung gemäß Anspruch 5 oder 6,
bei der die zweite Mittellinie (Sy; Sx) vertikal oder horizontal ausgerichtet ist.

8. Vorrichtung gemäß Anspruch 4, 5 oder 6,
bei der die Halterung (3) in dem Hauptrahmen (2) mittels eines Kugelgelenks (50) angeordnet ist, für Neigungsbewegungen um jede beliebige aller Mittellinien, die in einer Ebene liegen, die senkrecht zu der Durchgangsmittellinie der Halterung ist.

9. Vorrichtung gemäß einem der vorherigen Ansprüche,
die eine Zwischenhalterung (4) aufweist, die zwischen der Halterung (3) und dem Hauptrahmen (2) angeordnet ist,
wobei die Zwischenhalterung beweglich an dem Hauptrahmen angebracht ist, in einer Weise, die eine Drehung um die erste Mittellinie ermöglicht.

10. Vorrichtung gemäß Anspruch 9 und gemäß Anspruch 5,
bei der die Halterung (3) beweglich an der Zwischenhalterung (4) angebracht ist, in einer Weise, die eine Drehung um die zweite Mittellinie ermöglicht.

11. Vorrichtung gemäß einem der vorherigen Ansprüche,
bei der die Einrichtung (15) zwischen der Halterung (3) und dem Hauptrahmen (2) zum Vorspannen der Halterung in die neutrale Position angeordnet wurde, wobei vorzugsweise in der Neutralposition der Halterung die Durchgangsmittellinie (Sd) horizontal ausgerichtet ist.

12. Vorrichtung gemäß einem der vorherigen Ansprüche,
die eine Antriebseinrichtung (10-13) für die Abtrenneinrichtung aufweist, wobei die Antriebseinrichtung für die Abtrenneinrichtung an der Halterung (3) für eine gemeinsame Bewegung mit derselben angebracht ist.

13. Vorrichtung gemäß einem der vorherigen Ansprüche,
bei der die Durchgangseinrichtung (30) eine Zuführeinrichtung aufweist, die auf der vorgelagerten Seite der Abtrenneinrichtung angeordnet ist, wobei die Zuführeinrichtung ausgebildet ist zum Zuführen des Stamms in den Durchgang (14) gemäß einer Zuführmittellinie, wobei die Zuführmittellinie parallel zu der Startrichtung der Durchgangsmittellinie (Sd) ist, wobei vorzugsweise die Zuführmittellinie fest in dem Hauptrahmen ausgerichtet ist.

14. Vorrichtung gemäß einem der vorherigen Ansprüche,
bei der die Durchgangseinrichtung Durchziehvorrichtungen, die auf der nachgelagerten Seite des Durchgangs angeordnet sind, zum Ziehen des Stamms durch den Durchgang aufweist.

15. Erntevorrichtung als Anordnung einer Vorrichtung (1) gemäß einem der vorherigen Ansprüche und von Vorrichtungen zum Entfernen einer Sprossenpflanze aus dem Boden und Aufgreifen und Überführen der entfernten Sprossenpflanze, wobei vorzugsweise die Zuführeinrichtung (30) in einer Übernahmeposition platziert werden kann, um die aufgegriffene Sprossenpflanze von der Überführungsvorrichtung zu übernehmen.

## Revendications

1. Dispositif (1) pour enlever des germes de la tige d'une plante, comprenant:
un bâti principal (2);
un entraînement pour déplacer le bâti principal sur un champ moissonné;
un support (3) supporté dans le bâti principal;
des moyens de coupe entraînés (5, 8, 9) disposés sur le support pour couper le raccordement germe-tige;
dans lequel les moyens de coupe (5, 8, 9) définissent une voie de passage annulaire (14) pour la tige, laquelle voie de passage a une ligne centrale de voie de passage (Sd) qui, dans une position neutre du support, a une direction de départ;
des moyens de passage (30) prévus avec un entraînement pour faire passer la tige par la voie de passage ;
**caractérisé en ce que**:
le support (3) est disposé dans le bâti principal pour le mouvement initié dû aux moyens de coupe (5, 8, 9) en contact avec la tige pendant le passage de la tige dans les moyens de coupe, avec la translation de la ligne centrale de voie de passage (Sd) dans une direction ayant une composante directionnelle transversale à cette dernière et/ou avec l'inclinaison de la ligne centrale de voie de passage.

2. Dispositif selon la revendication 1,
dans lequel le support (3) est disposé dans le bâti principal (2) pour le mouvement pendant le passage de la tige dans les moyens de coupe (5, 8, 9), avec la translation de la ligne centrale de voie de passage (Sd) dans la direction verticale et/ou horizontale.

3. Dispositif selon la revendication 2, dans lequel le support (3) est mobile uniquement dans un plan transversal par rapport à la ligne centrale de voie de passage (Sd).

4. Dispositif selon la revendication 1, 2 ou 3,
dans lequel le support (3) est disposé dans le bâti principal (2) pour un mouvement d'inclinaison pendant le passage de la tige dans les moyens de coupe (5, 8, 9) d'une manière permettant la rotation autour d'une première ligne centrale (Sx ; Sy), laquelle première ligne centrale est transversale par rapport à la ligne centrale de voie de passage (Sd), dans la position neutre.

5. Dispositif selon la revendication 4,
dans lequel le support (3) est également disposé dans le bâti principal (2) pour un mouvement d'inclinaison pendant le passage de la tige dans les moyens de coupe (5, 8, 9) d'une manière permettant la rotation autour d'une seconde ligne centrale (Sy ; Sx), laquelle seconde ligne centrale est transversale à la ligne centrale de voie de passage (Sd) et transversale à la première ligne centrale (Sx ; Sy).

6. Dispositif selon la revendication 4 ou 5,
dans lequel la première ligne centrale (Sx ; Sy) est orientée horizontalement ou verticalement.

7. Dispositif selon la revendication 5 ou 6,
dans lequel la seconde ligne centrale (Sy ; Sx) est orientée verticalement ou horizontalement.

8. Dispositif selon la revendication 4, 5 ou 6,
dans lequel le support (3) est disposé dans le bâti principal (2) au moyen d'un joint à rotule (50) pour les mouvements d'inclinaison autour de l'une quelconque de toutes les lignes centrales qui sont dans un plan perpendiculaire à la ligne centrale de voie de passage du support.

9. Dispositif selon l'une quelconque des revendications précédentes,
comprenant un support intermédiaire (4) disposé entre le support (3) et le bâti principal (2),
dans lequel le support intermédiaire est fixé de manière mobile au bâti principal, d'une manière permettant la rotation autour de la première ligne centrale.

10. Dispositif selon la revendication 9 et selon la revendication 5,
dans lequel le support (3) est fixé, de manière mobile, au support intermédiaire (4), d'une manière permettant la rotation autour de la seconde ligne centrale.

11. Dispositif selon l'une quelconque des revendications précédentes,
dans lequel les moyens (15) ont été disposés entre le support (3) et le bâti principal (2) pour solliciter le support dans la position neutre, dans lequel, de préférence, dans la position neutre du support, la ligne centrale de voie de passage (Sd) est orientée horizontalement.

12. Dispositif selon l'une quelconque des revendications précédentes,
comprenant des moyens d'entraînement (10-13) pour les moyens de coupe, dans lequel les moyens d'entraînement pour les moyens de coupe sont fixés au support (3) pour le mouvement d'articulation avec ce dernier.

13. Dispositif selon l'une quelconque des revendications précédentes,
dans lequel les moyens de passage (30) comprennent des moyens d'alimentation disposés du côté en amont des moyens de coupe, lesquels moyens d'alimentation sont configurés, selon une ligne centrale d'alimentation, pour amener la tige dans la voie de passage (14), laquelle ligne centrale d'alimentation est parallèle à la direction de départ de la ligne centrale de voie de passage (Sd), dans lequel, de préférence, la ligne centrale d'alimentation est orientée de manière fixe, dans le bâti principal.

14. Dispositif selon l'une quelconque des revendications précédentes,
dans lequel les moyens de passage comprennent des moyens d'attraction disposés au niveau du côté en aval de la voie de passage, pour attirer la tige dans la voie de passage.

15. Dispositif de collecte en tant qu'ensemble composé d'un dispositif (1) selon l'une quelconque des revendications précédentes et de dispositifs pour déloger une pousse du sol et ramasser et transférer la pousse délogée, dans lequel, de préférence, les moyens d'alimentation (30) peuvent être placés dans une position de prélèvement pour prélever la pousse ramassée du dispositif de transfert.
